(19) **Europäisches Patentamt / European Patent Office / Office européen des brevets**

(11) **EP 2 249 604 B1**

(12) **FASCICULE DE BREVET EUROPEEN**

(45) Date de publication et mention
de la délivrance du brevet:
**24.10.2018 Bulletin 2018/43**

(51) Int Cl.:
***H04W 36/30*** *(2009.01)*

(21) Numéro de dépôt: **10159146.9**

(22) Date de dépôt: **06.04.2010**

(54) **Procédé de commutation d'une communication entre un réseau de diffusion vidéo numérique et un réseau cellulaire**

Verfahren zum Transfer einer Verbindung zwischen einem digitalen Videobroadcastnetz und einem zellularen Netz

Method for transferring a communication link between a video digital broadcast network and a cellular network

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.05.2009 FR 0952999**

(43) Date de publication de la demande:
**10.11.2010 Bulletin 2010/45**

(73) Titulaire: **Alcatel Lucent**
**91620 Nozay (FR)**

(72) Inventeurs:
• **Sayadi, Bessem**
**91620, NOZAY (FR)**
• **Kerboeuf, Sylvaine**
**91620, NOZAY (FR)**

(74) Mandataire: **Berthier, Karine et al**
**Alcatel-Lucent International**
**Patent Business**
**Site Nokia Paris Saclay**
**Route de Villejust**
**91620 Nozay (FR)**

(56) Documents cités:
**EP-A- 1 998 576      WO-A-01/72076**
**WO-A-2004/112417      US-A1- 2002 085 516**

**Description**

La présente invention concerne un procédé de commutation d'une communication entre un réseau de diffusion vidéo numérique et un réseau cellulaire.

On connaît des terminaux de communication ayant la capacité de se connecter à au moins deux réseaux de différentes natures telles que, d'une part, un réseau de téléphonie cellulaire - par exemple UMTS pour « Universal Mobile Télécommunications System » en anglais, et d'autre part, un réseau de diffusion vidéo tel que le réseau DVB-SH pour « Digital Video Broadcasting - Satellite services to Handhelds ».

Grâce à cette capacité, un tel terminal peut commuter une communication d'un premier réseau d'une première nature vers un second réseau d'une seconde nature afin, par exemple, d'assurer une continuité dans la communication lorsque la couverture du premier réseau est insuffisante.

A cet effet, il est connu d'utiliser un serveur de commutation, également dénommé serveur SMS pour « Service Management Server » en anglais, chargé de contrôler la qualité de réception du terminal à l'aide de, par exemple, un indicateur de force du signal reçu (RSSI pour received signal strength indication), un taux d'erreur de bit (BER pour Bit Error rate) et/ou un taux d'erreur de paquets (PER pour packet error rate).

Typiquement, le serveur SMS peut être informé par le terminal de la perte de groupes de données lors d'une communication effectuée via le réseau de diffusion vidéo. Dans ce cas, le server SMS peut transmettre, d'une part, une requête au terminal afin que ce dernier effectue une commutation vers un réseau cellulaire et, d'autre part, des informations requises par ce réseau cellulaire pour accueillir la commutation du terminal.

Un tel procédé présente de nombreux inconvénients. Notamment, il requiert la mise en oeuvre d'un serveur SMS centralisé qui doit gérer la qualité et les éventuelles commutations d'une pluralité de terminaux, ce qui résulte en un procédé complexe et coûteux.

Le document US-2002/085516 concerne l'itinérance verticale automatique et transparente entre un réseau local sans fil (WLAN) et un réseau sans fil étendu (WWAN). Il mentionne l'utilisation du taux d'erreur de paquets comme critère pour un transfert vertical de liens de communication radio (« handover vertical ») entre deux réseaux.

La présente invention résulte de la constatation que des protocoles de communication utilisant un codage de données de correction d'erreur du type IFEC, pour «Inter-burst Forward Error Correction» en anglais, donnent à un terminal le délai nécessaire pour gérer directement la qualité d'une communication transmise par un réseau de diffusion vidéo ou un réseau cellulaire sans interrompre la reproduction d'un contenu en cours de réception.

De fait, comme décrit en détail ultérieurement, un procédé du type IFEC utilise, d'une part, une redondance dans la transmission des données et, d'autre part, un entrelacement des données transmises qui permettent de générer, à partir d'un ou plusieurs groupe(s) de données correctement reçu(s), un ou plusieurs groupe(s) de données perdu(s).

Dès lors, un terminal recevant des groupes de données utilisant ce type de protocole IFEC peut commander la commutation d'une transmission en cours d'un réseau d'origine, typiquement un réseau de diffusion vidéo, vers un réseau de remplacement, typiquement un réseau cellulaire, pendant que terminal utilise des groupes de données reçus pour continuer à reproduire des paquets dont la perte est détectée, cette commutation ne nuisant alors pas à la qualité perçue par un utilisateur exploitant le contenu codé.

C'est pourquoi, la présente invention concerne un procédé de commutation d'une communication, reçue par un terminal via un réseau de diffusion numérique, codée par groupes de données conformes à un procédé du type IFEC utilisant une redondance et un entrelacement des données tels que le terminal puisse générer des données de paquets perdus à partir de données correctement reçues. Le terminal effectue les étapes suivantes:

-  l'étape de mesurer des pertes de groupes (k+1, k+2) de données (10) pendant la communication, et
-  l'étape de commander, via un réseau cellulaire, la commutation de la communication lorsque la mesure des pertes des groupes (k+1, k+2) de données dépasse un seuil de commutation (Th2) prédéterminé afin que cette communication se poursuive via ce réseau cellulaire.

Un tel procédé permet à un terminal de maintenir la continuité d'une communication avec un niveau de qualité, défini en fonction du nombre de groupes de données perdus lors de leur transmission, prédétermine.

De fait, l'invention permet de déterminer un seuil de perte de groupes dans une communication au-delà duquel la réception de cette communication est considérée comme compromise par le terminal qui peut directement commander une commutation vers un réseau cellulaire afin d'assurer la poursuite de cette communication.

Grâce à l'invention, cette commutation peut s'effectuer tout en maintenant une reproduction continue du contenu transmis, par exemple multimédia, puisqu'un procédé du type MPE-IFEC permet de pallier la perte de groupes de données pendant un délai permettant la commutation de la communication.

Un autre avantage de l'invention réside dans la baisse des consommations - en bande passante du réseau et en énergie du terminal - car il n'est plus nécessaire de transmettre des informations sur la qualité des communications du terminal vers le réseau.

Dans une réalisation, le terminal effectue l'étape supplémentaire de commander, via le réseau cellulaire, la retransmission de paquets perdus par ce réseau cellulaire lorsque la mesure des pertes des groupes de données dépasse un seuil de retransmission inférieur au seuil de commutation.

Selon une réalisation, le terminal effectue l'étape supplémentaire de déterminer les seuils de retransmission et de commutation en fonction d'au moins un paramètre représentatif du nombre de groupes de données entrelacées.

Dans une réalisation, le terminal effectue l'étape supplémentaire de déterminer les seuils de retransmission et de commutation en fonction d'au moins un paramètre représentatif de la redondance mise en oeuvre dans la transmission des groupes.

Selon une réalisation, le terminal effectue l'étape supplémentaire de commander une transmission ou une retransmission via le réseau cellulaire pendant qu'il génère, à partir de données correctement reçues, des données perdues.

Dans une réalisation, la taille des groupes de données étant constante, le terminal effectue l'étape supplémentaire d'allouer un délai maximum de réception à chaque groupe de données de telle sorte que, en l'absence de réception d'un groupe dans ce délai, ce groupe de données est considéré perdu.

Dans une réalisation, la taille des groupes de données étant constante, le terminal effectue l'étape supplémentaire d'allouer un délai maximum de réception à chaque groupe de données de telle sorte que, en l'absence de réception d'un groupe dans ce délai, ce groupe de données est considéré perdu.

Selon une réalisation, le terminal commande la commutation de la communication vers le réseau de diffusion numérique lorsqu'une mesure des pertes des groupes de données dépasse un seuil de commutation prédéterminé.

L'invention a aussi comme objet un terminal de communication destiné à recevoir une communication, via un réseau de diffusion numérique, codée par groupes de données conformes à un procédé du type IFEC utilisant une redondance et un entrelacement des données tels que le terminal peut générer des données de paquets perdus à partir de données correctement reçues. Le terminal comprend des moyens pour mesurer des pertes de groupes de données pendant la communication, et des moyens pour commander, via un réseau cellulaire, la commutation de la communication lorsque la mesure des pertes des groupes de données dépasse un seuil de commutation prédéterminé afin que la communication se poursuive via ce réseau cellulaire.

Dans une réalisation, la taille des groupes de données étant variable, le terminal effectue l'étape supplémentaire d'estimer une probabilité de récupérer un groupe perdu à l'aide d'un paramètre statistique, le terminal commandant une commutation de la communication si ce paramètre statistique dépasse un seuil prédéterminé.

L'invention concerne également un terminal de communication destiné à recevoir une communication, via un réseau de diffusion numérique, codée par groupes de données conformes à un procédé du type IFEC utilisant une redondance et un entrelacement des données tels que le terminal peut générer des données de paquets perdus à partir de données correctement reçues, caractérisé en ce qu'il comprend:

- Des moyens pour mesurer des pertes de groupes de données pendant la communication, et
- Des moyens pour commander, via un réseau cellulaire, la commutation de la communication lorsque la mesure des pertes des groupes de données dépasse un seuil de commutation prédéterminé afin que communication se poursuive via ce réseau cellulaire

De façon à mettre en oeuvre un procédé conforme à l'une des réalisations précédentes.

L'invention sera mieux comprise à la lumière de la description effectuée ci-dessous, à titre illustratif et non limitatif, en référence aux figures ci-jointes sur lesquelles :

- la figure 1 est un schéma représentatif d'un procédé du type MPE-IFEC,
- la figure 2 est un diagramme représentant la réception de groupes de données transmis selon un débit constant,
- la figure 3 est un diagramme représentant la perte de groupes de données transmis selon un débit constant.

Dans la description effectuée ci-dessous, un terminal conforme à l'invention comprend des moyens pour recevoir des données codées selon le protocole MPE-IFEC, pour « Multi-Protocol Encapsulation - Inter-burst Forward Error Correction » en anglais.

Un tel protocole est décrit, par exemple, dans le document « Digital Video Broadcasting (DVB) ; MPE-IFEC », DVB document A131 November 2008, publié par le groupement DVB Digital Video Broadcasting.

Selon ce type de protocole, on transmet des données applicatives, par exemple relatives à un contenu multimédia, dans des groupes - ou « burst » en anglais - tels que la perte de groupes de données applicatives lors de leur transmission peut être palliée par le terminal à partir de données transmises dans d'autres groupes correctement reçus.

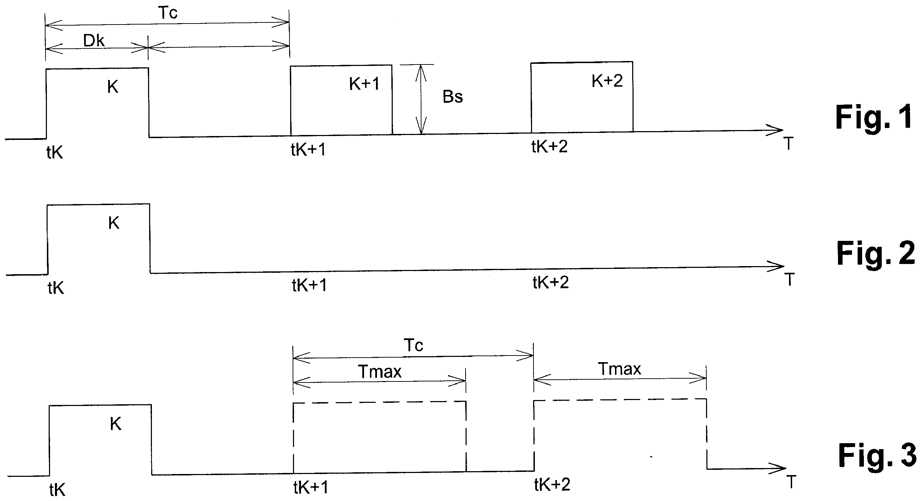

A cet effet, chacun des groupes 10 (figure 1) transmis selon un tel procédé comprend des données de correction d'erreur, du type FEC pour « Forward Error Correction » en anglais, générées à partir de données applicatives transmises dans plusieurs groupes k, k-1, ... k-D.

Plus précisément on définit une période EP d'encodage du paramètre de correction FEC telle que les données applicatives de EP groupes sont réparties sur un nombre B de matrices parallèles - étapes 12 et 14.

Ce paramètre B est également dénommé niveau, ou facteur, B d'encodage parallèle. La capacité d'un terminal à pallier à la perte de groupe(s) de données est d'autant plus grande que ce niveau B d'encodage est élevé mais, en contrepartie, le décodage des données requiert un délai accru.

A partir de ce niveau B d'encodage parallèle, on définit une profondeur d'entrelacement des groupes de données égale à B*EP (groupe de données), les données de correction d'erreur s'appliquant sur cette profondeur (EP*B) d'entrelacement.

Ainsi les données applicatives sont encodées sur B matrices internes à partir desquelles sont générées des données de corrections d'erreur, ou FEC.

Plus précisément, on utilise un paramètre S, dénommé par la suite profondeur du facteur de distribution FEC. Concrètement, les données FEC générées sont entrelacées - étape 16 - sur S matrices d'encodage, ce qui permet de limiter les conséquences de la perte d'un groupe vis-à-vis de la continuité de la reproduction du contenu transmis.

Finalement, il convient de noter qu'un délai D peut être appliqué de telle sorte qu'on associe les données applicatives d'un groupe applicatif k avec les données FEC d'un groupe d'encodage k-D.

Dans ce cas, un délai correspondant à ces D paquets doit être pris en compte par le récepteur pour décoder les paquets reçus.

Par ailleurs, le procédé MPE-IFEC prévoit d'utiliser une couche de liaison pouvant être alimentée par deux réseaux de natures distinctes, typiquement un réseau DVB-SH et un réseau cellulaire.

En considérant désormais un terminal recevant une transmission de diffusion vidéo, lors d'une première étape, le terminal peut contrôler la perte de groupes de données en analysant le trafic vidéo.

Dans cette première réalisation, on considère que la période Tc d'un cycle propre à un groupe de données - figure 1 - est constante, le flux transmis ayant un taux d'échantillonnage fixe dénommé CBR pour « Constant Bit Rate » en anglais.

En d'autres termes, la transmission d'un groupe k, k+1 et k+2 s'effectue dans un même délai Tc alors même chaque groupe k, k+1 et k+2 peut présenter une durée dk, dk+1 et dk+2 propre.

Toutefois, il peut se produire (figure 2) que des groupes - k+1 et k+2 dans cet exemple - soient perdus, par exemple suite à un déplacement du terminal récepteur dans une zone présentant une couverture faible ou nulle.

Dans ce cas (figure 3), le terminal peut considérer comme perdu un groupe de données après que le délai Tc propre à sa transmission - supérieur à une durée Tmax d'un groupe - se soit écoulé sans réception de groupe.

En fonction du nombre de groupes de données ainsi considérés comme perdus, un terminal conforme à l'invention relié à un réseau d'une première nature peut commuter vers un autre réseau d'un seconde nature.

A cet effet, dans cette réalisation, on utilise un seuil Th1 de nombre de groupes perdus exprimé, par exemple en considérant EP=1 et D=0, de telle sorte que :

$$Th1 = B* ((1 - code\_rate)/code\_rate))$$

Où « code_rate » est le taux de codage selon le protocole MPE-IFEC défini comme:

$$code\_rate= B/(B+S)$$

Dans cette réalisation, l'encodage se fait sur une matrice à T lignes et 255 colonnes, l'encodage étant effectué colonne par colonne. Ainsi une colonne comprend T octets.

Lorsque ce seuil Th1 de groupe de données perdu est dépassé, le terminal transmet une requête à un serveur de retransmission pour demander une retransmission du premier groupe dont la perte a été détectée.

A cet effet, le terminal se connecte au réseau cellulaire afin d'obtenir une autorisation de connexion permettant d'initialiser les états de fonctionnement requis au sein de ce réseau cellulaire.

En fonction des ressources disponibles, le réseau cellulaire alloue une fréquence radio adéquate au terminal qui, dès lors, se trouve connecté au réseau cellulaire et, simultanément, continue à recevoir un signal DVB-SH.

Cette retransmission peut s'effectuer dans un délai prédéfini par la norme MPE-IFEC, notamment fonction de la profondeur d'entrelacement S.

En résumé, lorsque le nombre de groupes de données perdus dépasse Th1, le terminal déclenche l'étape de se connecter au réseau cellulaire tout en maintenant sa connexion au réseau DVB-SH.

Dans cette situation, le terminal peut récupérer les groupes de données perdus via le réseau cellulaire tant que ceux-ci ne sont pas, en nombre, supérieur à un second seuil Th2 supérieure à Th1. Par exemple, ce seuil Th2 peut

être défini comme :

$$Th2 = B * ((1 - code\_rate)/code\_rate) + S - 1$$

Connaissant le délai t associé à la détection d'un groupe de données, il est possible de déterminer un délai T tel que, en cas de détection de perte de groupes de données successifs pendant ce délai t, la perte d'un nombre de groupes de données supérieur à ce second seuil Th2 entraîne une perte définitive des données transmises par ces paquets.

Dans ce cas, on estime que la communication est continuellement compromise via le réseau de diffusion numérique. Dès lors, le terminal commute d'un état de récupération des groupes de données perdus, via le réseau cellulaire, à un état de transmission continue via le réseau cellulaire selon la troisième étape de l'invention.

Toutefois, le terminal peut continuer à contrôler la qualité du signal DVB-SH afin de déterminer une possible commutation vers ce réseau au niveau de la couche de liaison.

Comme déjà indiqué, l'utilisation du procédé MPE-IFEC permet d'assurer au terminal le délai de temps suffisant pour commander et effectuer cette commutation, du réseau DVB-SH vers le réseau cellulaire, tout en assurant une continuité dans la reproduction du contenu transmis grâce aux groupes correctement reçus.

Lors de cette troisième étape, le terminal maintient son contrôle sur la perte de groupe de données selon le réseau DVB-SH tout en contrôlant également ses requêtes de retransmission de groupes de données.

Lorsque la retransmission de données est fixé sur une période dénommée T par la suite, le terminal peut décider de fermer sa connexion DVB-SH et d'envoyer une requête de retransmission au serveur pour transmettre tous les groupes de données postérieurs au dernier groupe requis.

Le terminal décide alors, de façon autonome, de commuter sur le réseau cellulaire puis, afin de réduire sa consommation en énergie, de fermer son interface DVB-SH.

Toutefois, le terminal maintient un contrôle sur la qualité du signal DVB-SH reçu en mesurant périodiquement un indicateur de la force du signal reçu, dénomme RSSI pour « Received Signal Strength Indicator » en anglais.

Ainsi le terminal peut déterminer s'il est avantageux de commuter sa réception vers le réseau DVB-SH. Dans ce cas, le terminal peut commuter du réseau cellulaire au réseau DVB-SH de façon satisfaisante.

La présente invention est susceptible de nombreuses variantes. Par exemple, dans une seconde réalisation décrite ci-dessous, on considère que le flux de groupe de données peut être contrôlé de façon statistique afin de prévoir l'instant où le procédé MPE-IFEC ne permet plus de récupérer des groupes de données perdus.

A cet effet, cette réalisation, utilise un vecteur V tel que :

$$V=[p(k-M-1),..,p(k)]$$

Où $p(j)$ est la probabilité de récupérer le groupe indexé sous un numéro j, k étant l'index du dernier groupe reçu et M le nombre de matrices utilisées dans la couche de liaison MPE-IFEC.

A chaque cycle, la réception d'un groupe peut être classée selon deux états :

* un état 1 qui correspond à une réception satisfaisante du groupe. Dans ce cas, toutes les colonnes du groupe sont reçues correctement et la probabilité de récupération de données est, dans ce cas, égale à 1.
* un état 0 qui correspond à une perte du groupe. Dans ce cas, toutes les colonnes du groupe sont considérées perdues.

Afin d'anticiper une interruption du service, les variations des différentes probabilités du vecteur V sont contrôlées à la réception/perte d'un groupe. La probabilité de récupération décroît avec la perte de groupes de données jusqu'à un seuil Th en dessous duquel il est statistiquement établi que le protocole MPE-iFEC ne peut récupérer un groupe qui doit être considéré comme définitivement perdu.

Dans ce cas, le terminal doit obtenir ce groupe via le réseau cellulaire avant que le terminal ne requiert les données du groupe perdu pour la reproduction du contenu multimédia, le délai maximum dont dispose le terminal étant - en nombre de groupes - de $j-(k-M-1)$.

Ce délai influence également le délai de transmission du réseau cellulaire sous la forme:

$$Bs / ((j-(k-M-1)) \times Bp)$$

Où Bs est la taille du groupe (en bits) et Bp une période de transmission du groupe (en secondes).

Le vecteur V est initialisé à une valeur de 0.5 puis, à chaque réception d'un groupe de données, le vecteur V est complété par une probabilité de 1 - lorsque le groupe est correctement reçu et que ses différentes colonnes sont insérées dans les matrices de décodage correspondantes - ou par une probabilité de 0 - lorsque le groupe est déclaré perdu et que la matrice de décodage correspondante est remplie avec des colonnes d'erreur.

Ce vecteur V se présentant comme un vecteur, ces insertions peuvent être effectuées selon un sens convenu, par exemple gauche ou droite.

A chaque modification du vecteur V, il est possible de tester sa valeur pour déterminer si elle est passée en dessous d'un seuil prédéterminé Th déclenchant une commutation de la communication.

Parallèlement, un second vecteur W est créé pour contenir l'index des groupes perdus et, si ce vecteur W n'est pas nul, une requête des premiers groupes indexés par le vecteur W et/ou du groupe le plus critique est transmise.

Dans une réalisation, cette requête n'est émise que si le réseau cellulaire présente un débit suffisant pour y répondre. Le cas échéant, si le réseau cellulaire ne permet pas d'effectuer la transmission de ce(s) groupe(s), la même procédure est envisagée vis-à-vis du groupe de données présentant le niveau critique le plus élevé parmi les groupes restant du vecteur W.

En résumé, la qualité de la communication est contrôlée par le terminal qui peut commander une commutation de la communication en cours, du réseau cellulaire vers le réseau de diffusion numérique, pour assurer la continuité de la communication et /ou pour en améliorer la qualité.

En effet le procédé du type MPE-IFEC permet, à nouveau, au terminal de compenser la perte de plusieurs groupes de données à partir de données correctement reçues pour générer un contenu tout en commandant la commutation de la communication.

La présente invention est susceptible de nombreuses variantes. Par exemple, le terminal peut comprendre des moyens pour mesurer la qualité de transmission du réseau cellulaire et maintenir la communication sur le réseau de diffusion numérique si la qualité du réseau cellulaire est inférieure à un seuil de qualité prédéterminé.

**Revendications**

1. Procédé de commutation d'une communication, reçue par un terminal via un réseau de diffusion vidéo numérique, codée par groupes (10,k, k+1, k+2) de données conformes à un procédé du type IFEC, pour "Inter-burst Forward Error Correction" en anglais, utilisant une redondance et un entrelacement des données tels que le terminal puisse générer des données de paquets perdus à partir de données correctement reçues, **caractérisé en ce que** le terminal effectue les étapes suivantes:

   - L'étape de mesurer des pertes de groupes (k+1, k+2) de données (10) pendant la communication, et
   - L'étape de commander, via un réseau cellulaire, la commutation de la communication lorsque la mesure des pertes des groupes (k+1, k+2) de données dépasse un seuil de commutation (Th2) prédéterminé afin que cette communication se poursuive via ce réseau cellulaire.

2. Procédé selon la revendication 1 **caractérisé en ce que** le terminal effectue l'étape supplémentaire de commander, via le réseau cellulaire, la retransmission de paquets perdus (k+1, k+2) par ce réseau cellulaire lorsque la mesure des pertes des groupes de données dépasse un seuil de retransmission (Th1) inférieur au seuil de commutation (Th2).

3. Procédé selon la revendication 1 ou 2 **caractérisé en ce que** le terminal effectue l'étape supplémentaire de déterminer les seuils de retransmission (Th1) et de commutation (Th2) en fonction d'au moins un paramètre (EP, B) représentatif du nombre de groupes de données entrelacés.

4. Procédé selon la revendication 1, 2 ou 3 **caractérisé en ce que** le terminal effectue l'étape supplémentaire de déterminer les seuils de retransmission (Th1) et de commutation (Th2) en fonction d'au moins un paramètre (EP, S) représentatif de la redondance mise en oeuvre dans la transmission des groupes.

5. Procédé selon l'une des revendications précédentes combinée à la revendication 2 **caractérisé en ce que** le terminal effectue l'étape supplémentaire de commander une transmission ou une retransmission via le réseau cellulaire pendant qu'il génère, à partir de données correctement reçues, des données perdues.

6. Procédé selon la revendication 5 **caractérisé en ce que** la taille des groupes (10,k, k+1, k+2) de données étant constante, le terminal effectue l'étape supplémentaire d'allouer un délai maximum (Tc) de réception à chaque groupe de données de telle sorte que, en l'absence de réception d'un groupe dans ce délai (Tc), ce groupe de données (k+1, k+2) est considéré perdu.

7. Procédé selon la revendication 5 **caractérisé en ce que**, la taille des groupes de données étant variable, le terminal effectue l'étape supplémentaire d'estimer une probabilité de récupérer un groupe perdu à l'aide d'un paramètre statistique (V), le terminal commandant une commutation de la communication si ce paramètre statistique dépasse un seuil (Th) prédéterminé.

8. Procédé selon l'une des revendications précédentes **caractérisé en ce que** le terminal effectue l'étape supplémentaire de commander la commutation de la communication vers le réseau de diffusion numérique lorsqu'une mesure des pertes des groupes de données dans le réseau cellulaire dépasse un seuil de commutation prédéterminé.

9. Terminal de communication destiné à recevoir une communication, via un réseau de diffusion vidéo numérique, codée par groupes de données conformes à un procédé du type IFEC, pour "Inter-burst Forward Error Correction" en anglais, utilisant une redondance et un entrelacement des données tels que le terminal peut générer des données de paquets perdus à partir de données correctement reçues, **caractérisé en ce qu'**il comprend:

   - Des moyens pour mesurer des pertes de groupes de données pendant la communication, et
   - Des moyens pour commander, via un réseau cellulaire, la commutation de la communication lorsque la mesure des pertes des groupes de données dépasse un seuil de commutation prédéterminé afin que la communication se poursuive via ce réseau cellulaire,

   Selon un procédé conforme à l'une des revendications précédentes.

## Patentansprüche

1. Verfahren zum Umschalten einer Kommunikation, empfangen durch ein Endgerät über ein digitales Netz zur Videoausstrahlung, codiert durch Datengruppen (10, k, k+1, k+2) gemäß einem Verfahren vom Typ IFEC, für "Inter-burst Forward Error Correction" auf Englisch, unter Verwendung einer Redundanz und einer Verschachtelung von Daten, derart dass das Endgerät aus korrekt empfangenen Daten verlorene Datenpakete generieren kann, **dadurch gekennzeichnet, dass** das Endgerät folgende Schritte ausführt:

   - den Schritt des Messens der Verluste von Datengruppen (k+1, k+2) (10) während der Kommunikation, und
   - den Schritt des Befehlens, über ein zellulares Netz, des Umschaltens der Kommunikation, sobald die Messung der Verluste von Datengruppen (k+1, k+2) eine vorbestimmte Umschaltgrenze (Th2) überschreitet, damit diese Kommunikation über dieses zellulare Netz fortgesetzt wird.

2. Verfahren nach Anspruch 1, **dadurch gekennzeichnet, dass** das Endgerät den zusätzlichen Schritt des Befehlens, über das zellulare Netz, der Neuübertragung von verlorenen Paketen (k+1, k+2) durch dieses zellulare Netz ausführt, sobald die Messung der Verluste von Datengruppen eine Neuübertragungsgrenze (Th1) überschreitet, die niedriger als die Umschaltgrenze (Th2) ist.

3. Verfahren nach Anspruch 1 oder 2, **dadurch gekennzeichnet, dass** das Endgerät den zusätzlichen Schritt des Bestimmens der Neuübertragungs- (Th1) und der Umschaltgrenze (Th2) in Abhängigkeit von mindestens einem Parameter (EP, B) ausführt, der bezeichnend ist für die Anzahl von verschachtelten Datengruppen.

4. Verfahren nach Anspruch 1, 2 oder 3, **dadurch gekennzeichnet, dass** das Endgerät den zusätzlichen Schritt des Bestimmens der Neuübertragungs- (Th1) und der Umschaltgrenze (Th2) in Abhängigkeit von mindestens einem Parameter (EP, S) ausführt, der bezeichnend ist für die Redundanz, die bei der Übertragung der Gruppen angewendet wird.

5. Verfahren nach einem der vorstehenden Ansprüche in Kombination mit Anspruch 2, **dadurch gekennzeichnet, dass** das Endgerät den zusätzlichen Schritt des Befehlens einer Übertragung oder einer Neuübertragung über das zellulare Netz ausführt, während es aus den korrekt empfangenen Daten verlorene Daten generiert.

6. Verfahren nach Anspruch 5, **dadurch gekennzeichnet, dass** bei konstanter Größe der Datengruppen (10, k, k+1, k+2) das Endgerät den zusätzlichen Schritt des Zuweisens einer maximalen Empfangswartezeit (Tc) zu jeder Datengruppe so ausführt, dass mangels eines Empfangs einer Gruppe innerhalb dieser Wartezeit (Tc) diese Datengruppe (k+1, k+2) als verloren gilt.

7. Verfahren nach Anspruch 5, **dadurch gekennzeichnet, dass** bei variabler Größe der Datengruppen das Endgerät den zusätzlichen Schritt des Schätzens einer Wahrscheinlichkeit zum Wiederherstellen einer verlorenen Gruppe mithilfe eines statistischen Parameters (V) ausführt, wobei das Endgerät ein Umschalten der Kommunikation befiehlt, wenn dieser statistische Parameter eine vorbestimmte Grenze (Th) überschreitet.

8. Verfahren nach einem der vorstehenden Ansprüche, **dadurch gekennzeichnet, dass** das Endgerät den zusätzlichen Schritt des Befehlens des Umschaltens der Kommunikation auf das digitale Ausstrahlungsnetz ausführt, sobald eine Messung der Verluste von Datengruppen in dem zellularen Netz eine vorbestimmte Umschaltgrenze überschreitet.

9. Kommunikationsendgerät, das dazu bestimmt ist, eine Kommunikation über ein digitales Netz zur Videoausstrahlung zu empfangen, codiert durch Datengruppen gemäß einem Verfahren vom Typ IFEC, für "Inter-burst Forward Error Correction" auf Englisch, unter Verwendung einer Redundanz und einer Verschachtelung von Daten, derart dass das Endgerät aus korrekt empfangenen Daten verlorene Datenpakete generieren kann, **dadurch gekennzeichnet, dass** es umfasst:

   - Mittel zum Messen der Verluste von Datengruppen während der Kommunikation, und
   - Mittel zum Befehlen, über ein zellulares Netz, des Umschaltens der Kommunikation, sobald die Messung der Verluste von Datengruppen eine vorbestimmte Umschaltgrenze überschreitet, damit die Kommunikation über dieses zellulare Netz fortgesetzt wird,

   nach einem Verfahren gemäß einem der vorstehenden Ansprüche.

**Claims**

1. Method for switching a communication, received by a terminal via a digital video broadcast network, encoded by groups (10, k, k+1, k+2) of data in accordance with a method of the IFEC type, for "Inter-burst Forward Error Correction", using redundancy and interlacing of data such that the terminal can generate lost data packets from correctly received data, **characterized in that** the terminal performs the following steps:

   - The step of measuring the losses of groups (k+1, k+2) of data (10) during the communication, and
   - The step of commanding, via a cellular network, the switching of the communication when the measurement of the losses of the groups (k+1, k+2) of data exceeds a predetermined switching threshold (Th2) in order for that communication to continue via that cellular network.

2. A method according to claim 1, **characterized in that** the terminal performs the additional step of commanding, via the cellular network, the retransmission of lost packets (k+1, k+2) by that cellular network when the measurement of the losses of the groups of data exceeds a retransmission threshold (Th1) less than the switching threshold (Th2).

3. A method according to claim 1 or 2, **characterized in that** the terminal performs the additional step of determining the retransmission (Th1) and switching (Th2) thresholds based on at least one parameter (EP, B) representative of the number of interlaced groups of data.

4. A method according to claim 1, 2, or 3, **characterized in that** the terminal performs the additional step of determining the retransmission (Th1) and switching (Th2) thresholds based on at least one parameter (EP, S), representative of the redundancy implemented in the transmission of the groups.

5. A method according to any one of the preceding claims in combination with claim 2, **characterized in that** the terminal performs the additional step of commanding a transmission or retransmission via the cellular network while it is generating the lost data from correctly received data.

6. A method according to claim 5, **characterized in that** the size of the groups (10, k, k+1, k+2) of data being constant, the terminal performs the additional step of allocating a maximum reception timeframe (Tc) to each group of data such that, in the absence of a group being received within that timeframe (Tc), that group of data (k+1, k+2) is considered lost.

7. A method according to claim 5, **characterized in that**, the size of the groups of data being variable, the terminal performs the additional step of estimating a likelihood of retrieving a lost group with the help of a statistical parameter (V), the terminal commanding a switching of the communication if that statistical parameter exceeds a predetermined threshold (Th).

8. A method according to one of the preceding claims, in that the terminal performs the additional step of commanding the switching of the communication to the digital broadcast network when the measurement of the losses of groups of data within the cellular network exceeds a predetermined switching threshold.

9. A communication terminal intended to receive a communication, via a digital video broadcast network, encoded by groups of data in accordance with a method of the IFEC type, for "Inter-burst Forward Error Correction", using redundancy and interlacing of data such that the terminal can generate lost data packets from correctly received data, **characterized in that** it comprises:

- Means for measuring the losses of groups of data during the communication, and
- Means for commanding, via a cellular network, the switching of the communication when the measurement of the losses of the groups of data exceeds a predetermined switching threshold in order for that communication to continue via that cellular network,

According to a method in accordance with one of the preceding claims.

EP 2 249 604 B1

**Fig. 1**

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002085516 A

**Littérature non-brevet citée dans la description**

- Digital Video Broadcasting (DVB) ; MPE-IFEC. DVB document A131. groupement DVB Digital Video Broadcasting, Novembre 2008